# FASCICULE DE BREVET EUROPEEN

(11) **EP 1 568 300 B1**
(45) Date de publication et mention de la délivrance du brevet: **02.05.2007**
(21) Numéro de dépôt: 05356037.1
(22) Date de dépôt: 23.02.2005
(51) Int. Cl.: A47J 27/04, A47J 36/20

(54) **Element de cuisson à fond amovible pour cuiseur vapeur**
Kochelement mit abnehmbarem Boden für einen Dampfkocher
Cooking element with removable bottom for steam cooker

(30) Priorité: 25.02.2004 FR 0401899
(43) Date de publication de la demande: 31.08.2005
(73) Titulaire: SEB S.A., 69130 Ecully (FR)
(72) Inventeur: Dumoux, Philippe, 21120 Gemeaux (FR)
(74) Mandataire: Kiehl, Hubert

(56) Documents cités:
- WO-A-00/30511
- CH-A- 225 971
- GB-A- 190 720 184
- GB-A- 191 002 455
- US-A- 2 742 850

## Description

La présente invention concerne le domaine technique des appareils de cuisson à la vapeur.

Les cuiseurs vapeur comportent un ou plusieurs récipients de cuisson disposés sur une base de production de vapeur. Les récipients de cuisson comportent un fond perforé permettant à la vapeur de s'élever en passant autour des aliments disposés sur le fond perforé. La base de production de vapeur peut disposer ou non d'un moyen de chauffage autonome de l'eau.

Pour faciliter le service des aliments, ainsi que le nettoyage, il est connu du document WO 00/30511 de réaliser un élément de cuisson comportant une paroi latérale tubulaire associée à un fond perforé amovible pour former un récipient de cuisson.

Usuellement, cet élément de cuisson est réalisé en polycarbonate. Ce matériau polymère présente l'avantage de ne pas être sensible à la coloration. Certains aliments, notamment les carottes, colorent de manière indélébile certains matériaux polymères, tels que par exemple le polypropylène.

Toutefois, ce matériau présente l'inconvénient de subir une hydrolyse au fur et à mesure de l'exposition à la vapeur et des passages répétés au lave-vaisselle.

De plus, les trous du fond perforé de cet élément de cuisson sont relativement petits et sont difficilement nettoyables.

Le document WO 00/30511 propose certes de réaliser la paroi latérale tubulaire et le fond perforé amovible en acier inoxydable au lieu du polycarbonate, mais ne propose pas d'exemple de réalisation spécifique.

Il est connu du document US 5 275 094 un panier de cuisson pour cuiseur vapeur comportant un fond ondulé selon une direction radiale. Des perforations oblongues sont ménagées dans les creux du fond. Cette disposition évite que les aliments soient en contact direct avec la sortie de vapeur et facilite le nettoyage. Toutefois le fond perforé de ce panier de cuisson n'est pas amovible. De plus la matière utilisée pour réaliser ce panier de cuisson n'est pas précisée.

Il est connu du document EP 0 788 754 un récipient de cuisson et un panier de cuisson intérieur comportant un fond présentant des perforations oblongues ménagées dans des zones déprimées du fond. Les perforations oblongues sont agencées de manière radiale. Le récipient de cuisson est par exemple réalisé dans un matériau polymère blanc, tel que le polypropylène. Le récipient de cuisson est utilisé avec des aliments libérant peu ou pas de pigments colorés lors de leur cuisson. Le panier de cuisson intérieur est réalisé dans un matériau polymère noir. Le panier de cuisson intérieur est utilisé avec des aliments libérant des pigments colorés lors de leur cuisson, tels que les carottes, les poivrons, ou les betteraves rouges. Toutefois le fond perforé du récipient de cuisson ou du panier de cuisson intérieur n'est pas amovible.

Un élément de cuisson pour cuiseur vapeur selon le préambule de la revendication 1 est connu du document US 5 069 198.

Un but de la présente invention est de proposer un élément de cuisson comportant une paroi latérale tubulaire et un fond amovible perforé qui évite l'accrochage des aliments et qui présente une meilleure tenue à l'usage, notamment qui évite les phénomènes de dégradation dus à l'hydrolyse ou encore les tâches dues au contact avec les aliments.

Un autre but de la présente invention est de proposer un élément de cuisson du type précité, dans lequel le nettoyage est facilité.

Un autre but de la présente invention est de proposer un élément de cuisson du type précité, dans lequel la paroi latérale tubulaire et le fond amovible perforé présentent un dispositif de retenue.

Un autre but de la présente invention est de proposer un élément de cuisson du type précité, dont la construction reste économique.

Ces buts sont atteints avec un élément de cuisson pour cuiseur vapeur selon les caractéristiques de la revendication 1.

Les perforations agencées dans ladite ou lesdites dépressions facilitent le passage de la vapeur, les aliments n'étant généralement pas directement en contact avec les perforations. Cette disposition facilite également le nettoyage. Ladite dépression ou chacune desdites dépressions peut comporter une ou plusieurs perforations.

Cette disposition permet de limiter ou d'éviter le contact des aliments avec ladite ou lesdites conformations, et contribue ainsi à faciliter le service des aliments.

Cette disposition permet de rigidifier la plaque ajourée tout en permettant le passage de la vapeur. De préférence plusieurs perforations sont prévues dans ladite ou lesdites conformations. Cette disposition permet de réaliser un fond perforé dans une matière facile à nettoyer, non affectée par les pigments alimentaires, et résistant aux agents lessiviels. La présence d'un rebord périphérique est évitée, un tel rebord étant susceptible de gêner le transfert des aliments et/ou de compliquer l'implantation d'organes de retenue coopérant avec la paroi latérale tubulaire. La plaque ajourée peut être obtenue par emboutissage et découpe des perforations lors d'une même opération. La plaque ajourée peut notamment être réalisée en aluminium revêtu. De préférence plusieurs perforations sont prévues dans ladite ou lesdites conformations.

Avantageusement alors, la paroi latérale tubulaire est réalisée dans une matière différente de la matière de la plaque ajourée. Les contraintes d'utilisation ne sont pas les mêmes pour le fond perforé et pour la paroi latérale tubulaire. La plupart des aliments à cuire reposent sur le fond perforé, mais ne touchent que rarement la paroi latérale tubulaire. Le nettoyage du fond perforé doit donc être plus poussé. Du fait d'un faible encombrement, le passage du fond perforé au lave-vaisselle est facilité. Au contraire, le passage au lave-vaisselle de la paroi latérale tubulaire, moins sale et plus encombrante, apparaît moins nécessaire.

Avantageusement alors la paroi latérale tubulaire est réalisée dans une matière transparente ou translucide. La paroi latérale tubulaire peut notamment être réalisée en matière plastique, ou en verre.

Plus particulièrement, la plaque ajourée présente des conformations agencées en dehors de la périphérie de la plaque ajourée. Cette disposition contribue à la rigidité de la plaque ajourée et permet de réduire l'épaisseur de la plaque ajourée.

Selon une forme de réalisation avantageuse, les conformations sont agencées dans une zone plane de la plaque ajourée. Cette disposition simplifie la réalisation de la plaque ajourée tout en permettant de la rigidifier. En alternative, toute la surface de la plaque ajourée pourrait être pourvue de conformations.

Avantageusement alors, pour une meilleure rigidité de la plaque ajourée, les conformations occupent au moins 30% de la surface de la plaque ajourée.

Avantageusement encore, la plaque ajourée comporte une zone centrale plus proche du centre que du bord de ladite plaque ajourée et toute droite passant par ladite zone centrale rencontre ladite conformation ou au moins une desdites conformations. Cette disposition permet de limiter la flexion de la plaque ajourée.

Avantageusement alors toute droite passant par ladite zone centrale rencontre de part et d'autre de ladite zone centrale ladite conformation ou au moins une desdites conformations. Cette disposition permet de rigidifier davantage la plaque ajourée tout en permettant le passage de la vapeur.

Avantageusement encore, au moins certaines des conformations sont allongées. Cette disposition permet de renforcer la rigidité de la plaque perforée. Cette disposition permet également de loger plus aisément des perforations dans lesdites conformations. En alternative la ou les conformations peuvent notamment présenter une forme en spirale et/ou une forme repliée, et/ou une forme ramifiée, et/ou présenter des portions allongées.

Avantageusement alors, au moins certaines des conformations allongées sont agencées circonférentiellement. Cette disposition permet de faciliter la rigidification de la plaque ajourée. De plus la disposition circonférentielle desdites conformations allongées permet l'utilisation d'un mouvement tournant pour le nettoyage manuel, plus usuel que des mouvements radiaux, et contribue donc à faciliter le nettoyage. En alternative, au moins certaines portions de ladite conformation ou desdites conformations peuvent être agencées circonférentiellement ou avec un angle inférieur à 30° par rapport à la direction circonférentielle.

Avantageusement alors, au moins deux séries desdites conformations allongées sont agencées de manière alternée. Cette disposition permet d'améliorer la rigidification de la plaque ajourée. La présence d'une zone plane selon une direction radiale peut être évitée, une telle zone plane favorisant une déformation Irréversible en flexion de la plaque ajourée. Avantageusement alors, au moins trois séries desdites conformations allongées sont agencées de manière alternée.

Avantageusement, pour une meilleure diffusion de la vapeur, chaque dépression comporte au moins une des perforations.

Avantageusement, pour faciliter le nettoyage et la diffusion de la vapeur, au moins certaines des perforations sont allongées.

Avantageusement, le rapport entre la profondeur et la largeur des dépressions est inférieur à 1, cette disposition permettant de faciliter la réalisation de la plaque ajourée et de faciliter son nettoyage. De préférence, le rapport entre la profondeur et la largeur des dépressions est inférieur à 0,7.

Selon une forme de réalisation avantageuse, des pièces présentant une languette de retenue apte à coopérer avec une butée inférieure de la paroi latérale tubulaire sont montées sur la plaque ajourée. Cette disposition permet de solidariser le fond perforé avec la paroi latérale tubulaire. Les languettes de retenue peuvent être rigides si la paroi latérale tubulaire est flexible. Les languettes de retenue peuvent être flexibles et/ou mobiles si la paroi latérale tubulaire est rigide.

Alors, selon une disposition avantageuse, les pièces prennent appui sur la plaque ajourée et présentent des bras engagés sous la plaque ajourée. Cette disposition permet de faciliter le repérage des moyens de retenue. En alternative, les pièces peuvent notamment être montées sous la plaque ajourée et présenter des bras prenant appui sur la plaque ajourée.

Avantageusement encore, chaque pièce est logée dans une dépression périphérique de la plaque ajourée. Cette disposition permet d'éviter les aspérités sur la surface, et de faciliter le nettoyage. Les bras peuvent être engagés dans des découpes ou sous des rebords latéraux de la plaque ajourée.

Avantageusement encore, chaque pièce comporte au moins un renfoncement dans lequel la plaque ajourée est déformée pour réaliser un point d'ancrage. Cette disposition permet de réaliser l'assemblage des pièces et de la plaque ajourée de manière particulièrement économique. De plus, un tel assemblage rend le nettoyage du fond perforé plus facile qu'avec un assemblage par vis.

Avantageusement encore, la plaque ajourée comporte une conformation périphérique s'étendant entre les languettes de retenue. La conformation périphérique peut être en creux et/ou en relief. Cette disposition permet de renforcer encore la rigidité de la plaque ajourée.

Avantageusement encore le fond perforé présente une géométrie elliptique et comporte deux languettes de retenue disposées de manière diamétralement opposées selon le petit diamètre. Cette disposition permet de faciliter le retrait du fond perforé.

L'invention sera mieux comprise à l'étude d'un exemple de réalisation, pris à titre nullement limitatif, accompagné de variantes, illustré dans les figures annexées, dans lesquelles :
- la figure 1 est une vue en éclaté d'un élément de cuisson selon l'invention, comportant une paroi latérale annulaire et un fond amovible perforé,
- la figure 2 est une vue agrandie de l'un des organes d'accrochage du fond amovible perforé,
- la figure 3 est une vue en coupe et en perspective montrant l'accrochage du fond amovible perforé à la paroi latérale annulaire.

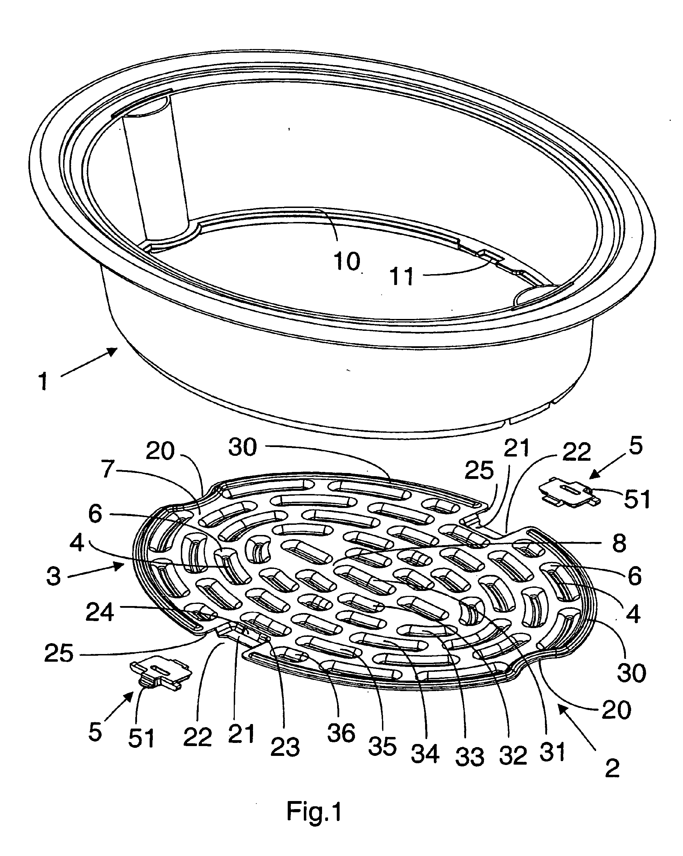

La figure 1 illustre un élément de cuisson pour cuiseur vapeur, selon l'invention. L'élément de cuisson comprend une paroi latérale tubulaire 1 et un fond perforé 2 amovible.

La paroi latérale tubulaire 1 présente un épaulement intérieur 10 prévu pour recevoir le fond perforé 2. L'épaulement intérieur 10 s'étend sur toute la circonférence de la paroi latérale tubulaire 1. A titre de variante, l'épaulement intérieur peut être discontinu.

Le fond perforé 2 comporte deux languettes de retenue 51 aptes à coopérer avec une butée inférieure 11 de la paroi latérale tubulaire 1. Le fond perforé 2 présente une géométrie elliptique. Les deux languettes de retenue 51 sont disposées de manière diamétralement opposées selon le petit diamètre. A titre de variante, le fond perforé 2 peut être dépourvu de languettes de retenue 51, ou comporter plus de deux languettes de retenue.

Le fond perforé 2 comporte une plaque ajourée 3 munie de perforations 4. Des pièces 5 sont montées sur la plaque ajourée 3. Chaque pièce 5 présente une des languettes de retenue 51. A titre de variante, les languettes de retenue pourraient être issues de la plaque ajourée. A titre de variante, d'autres géométries peuvent être envisagées pour le fond perforé 2 et la paroi latérale tubulaire 1.

La plaque ajourée 3 est obtenue par déformation d'une tôle métallique revêtue ou non. La plaque ajourée 3 est par exemple réalisée en acier inoxydable, ou encore en aluminium revêtu d'une couche superficielle anti-adhérente, telle que par exemple une laque ou du PTFE. Si désiré, le revêtement de la plaque ajourée 3 peut être partiel, par exemple limité à la face supérieure de la plaque ajourée 3.

La plaque ajourée 3 est avantageusement réalisée à partir d'une tôle mince. L'épaisseur de la tôle est avantageusement inférieure à 1,5 mm dans le cas de l'aluminium revêtu (par exemple comprise entre 1 mm et 1,5 mm), et avantageusement inférieure à 1 mm dans le cas de l'acier inoxydable (par exemple comprise entre 0,6 mm et 1 mm).

La paroi latérale tubulaire 1 est avantageusement réalisée dans une matière différente de la matière de la plaque ajourée 3. La paroi latérale tubulaire 1 peut être réalisée dans une matière transparente ou translucide, par exemple en verre ou en matière plastique. La paroi latérale tubulaire 1 peut notamment être réalisée en polycarbonate.

La plaque ajourée 3 présente une géométrie elliptique, avec deux encoches latérales 20 agencées selon le grand diamètre, et deux dépressions périphériques 21 agencées selon le petit diamètre. Les dépressions périphériques 21 ménagent également des encoches latérales 22. Chaque dépression périphérique 21 comporte une paroi latérale 23 présentant une ouverture frontale 24. Les encoches latérales 22 ménagent des rebords latéraux 25 dans la plaque ajourée 3.

Tel que bien visible sur la figure 1, la plaque ajourée 3 est dépourvue de rebord périphérique annulaire. Cette disposition est défavorable pour la rigidité de la plaque ajourée. Toutefois, les dépressions périphériques 21 contribuent localement à la rigidité de la plaque ajourée 3. De plus, le relief de la plaque ajourée contribue à la rigidité de la plaque ajourée 3.

La plaque ajourée 3 comporte des conformations 30, 31, 32, 33, 34, 35, 36 agencées en dehors de la périphérie de la plaque ajourée 3. Les conformations 30, 31, 32, 33, 34, 35, 36 permettant d'améliorer la rigidité et de réduire l'épaisseur de ladite plaque. Les conformations 30, 31, 32, 33, 34, 35, 36 sont agencées dans une zone plane de la plaque ajourée 3. Les conformations 30, 31, 32, 33, 34, 35, 36 occupent au moins 30% de la surface de la plaque ajourée 3. Les conformations 30, 31, 32, 33, 34, 35, 36 sont agencées dans une zone plane 7 de la plaque ajourée 3.

La plaque ajourée 3 comporte deux conformations 30 s'étendant près du bord de la plaque ajourée entre les languettes de retenue 51. Les conformations 30 sont allongées et sont prévues pour rigidifier le bord de la plaque ajourée 3. Les conformations 30 forment un relief convexe. Les conformations 30 s'étendent à distance du bord de la plaque ajourée 3. La hauteur des conformations 30 est par exemple de 1,5 mm. A titre de variante, la plaque ajourée 3 peut comporter plusieurs conformations 30 s'étendant entre les languettes de retenue 51. A titre de variante, les conformations 30 pourraient présenter un relief au moins partiellement concave. A titre de variante, les conformations 30 pourraient être supprimées ou être remplacées par une ou plusieurs portions de rebord périphérique non annulaire.

Les conformations 31, 32, 33, 34, 35, 36 sont allongées. Les conformations 31, 32, 33, 34, 35, 36 sont réparties en plusieurs séries. Les conformations 31 de la première série sont au nombre de trois et sont agencées selon le grand axe de l'ellipse. La conformation 31 centrale est plus longue que la largeur des encoches latérales 22, pour une meilleure rigidité de la plaque ajourée 3. Les conformations 32 de la deuxième série sont au nombre de quatre et sont disposées par paire de part et d'autre des conformations 31, de manière circonférentielle. Les conformations 32 sont ainsi légèrement incurvées. Les conformations 33 de la troisième série sont au nombre de dix et sont agencées circonférentiellement autour des conformations 32. Les conformations 34 de la quatrième série sont au nombre de dix et sont agencées circonférentiellement autour des conformations 33. Les conformations 35 de la cinquième série sont au nombre de douze et sont agencées circonférentiellement autour des conformations 34. Les conformations 36 de la sixième série sont au nombre de douze et sont agencées circonférentiellement autour des conformations 35, trois conformations 36 étant disposées entre chacune des encoches latérales 20 et chacune des encoches latérales 22. Les conformations 33, 34, 35, 36 allongées sont légèrement incurvées.

La plaque ajourée 3 présente au moins deux séries de conformations 33, 34, 35 allongées agencées circonférenciellement et de manière alternée. En d'autres termes, une section radiale de la plaque ajourée 3 rencontre au moins l'une des séries de conformations 33, 34, 35 allongées, quelle que soit l'orientation de cette section. Cette disposition permet de rigidifier la plaque ajourée 3 et ainsi d'éviter le risque de déformer de manière irréversible la plaque ajourée 3 lors d'une manipulation, ou d'avoir une plaque trop souple ne supportant pas le poids des aliments. Plus particulièrement, la plaque ajourée 3 présente trois séries de conformations 33, 34, 35 allongées agencées circonférenciellement et de manière alternée.

Ainsi la plaque ajourée 3 comporte une zone centrale 8 plus proche du centre que du bord de ladite plaque ajourée, toute droite passant par ladite zone centrale 8 rencontrant au moins l'une des conformations 30, 31, 32, 33, 34, 35, 36. Plus particulièrement, toute droite passant par ladite zone centrale 8 rencontre au moins l'une des conformations 30, 31, 32, 33, 34, 35, 36 de part et d'autre de ladite zone centrale 8.

Ainsi, tel que bien visible sur la figure 1, la plaque ajourée 3 est dépourvue de rebord périphérique annulaire et présente selon une section radiale quelconque au moins une des conformations 30, 31, 32, 33, 34, 35, 36. Une perforation 4 est ménagée dans chacune des conformations 31, 32, 33, 34, 35, 36. Les conformations 30, 31, 32, 33, 34, 35, 36 sont allongées. Les conformations 32, 33, 34, 35, 36 sont agencées circonférentiellement. Ainsi la plaque ajourée 3 comporte selon une section diamétrale quelconque au moins deux conformations allongées agencées de part et d'autre du centre de la plaque ajourée 3, contribuant efficacement à sa rigidification.

Les conformations 31, 32, 33, 34, 35, 36 allongées sont des dépressions 6. Les perforations 4 sont ménagées dans le fond des dépressions 6. A titre de variante, certaines des conformations peuvent être au moins partiellement concaves, au moins certaines des conformations étant alors des dépressions. Des perforations sont alors ménagées dans le fond d'au moins certaines des dépressions. A titre de variante, chaque dépression peut comporter au moins une des perforations. De préférence, toutes les perforations sont ménagées dans le fond des dépressions 6.

Dans l'exemple de réalisation proposé, la profondeur des dépressions 6 est de l'ordre de 3,5 à 4 mm, et la largeur des dépressions 6 est de l'ordre de 7 mm. Le rapport entre la profondeur et la largeur des dépressions est de l'ordre de 0,5 à 0,6. A titre de variante, d'autres proportions peuvent être envisagées, avec avantageusement un rapport inférieur à 1, et de préférence inférieur à 0,7, pour faciliter le nettoyage des dépressions 6.

Les perforations 4 sont allongées. A titre de variante, de préférence au moins certaines des perforations 4 sont allongées.

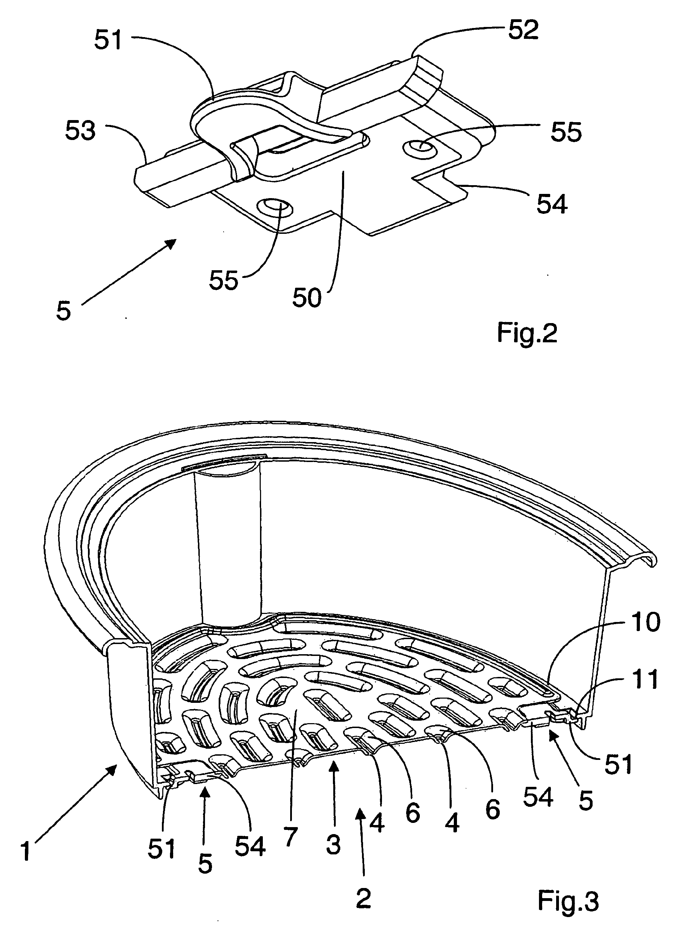

Les pièces 5, dont l'une est illustrée à la figure 2, comportent un corps 50 prévu pour être logé dans l'une des dépressions périphériques 21, une languette de retenue 51 apte à coopérer avec une butée inférieure 11 de la paroi latérale tubulaire 1, des bras 52, 53 prévus pour être engagés sous les rebords latéraux 25 de la plaque ajourée 3, un bras 54 prévu pour être engagé dans l'ouverture frontale 24.

Ainsi les pièces 5 prennent appui sur la plaque ajourée 3, et présentent des bras 52, 53, 54 engagés sous la plaque ajourée 3. Chaque pièce 5 est logée dans l'une des dépressions périphériques 21 de la plaque ajourée 3.

Le corps 50 comporte deux renfoncements 55 dans lesquels la plaque ajourée 3 est déformée pour réaliser un point d'ancrage. A titre de variante chaque pièce 5 comporte au moins un renfoncement 55 dans lequel la plaque ajourée 3 est déformée pour réaliser un point d'ancrage. A titre de variante, d'autres moyens d'assemblage peuvent être utilisés.

La figure 3 illustre l'une des pièces 5 montée sur la plaque ajourée 3 mise en place dans la paroi latérale tubulaire 1. La plaque ajourée 3 prend appui sur l'épaulement intérieur 10 de la paroi latérale tubulaire 1. La languette de retenue 51 coopère avec la butée inférieure 11 de la paroi latérale tubulaire 1.

Pour retirer le fond perforé 2 amovible de la paroi latérale tubulaire 1, l'utilisateur exerce une traction sur la paroi latérale tubulaire 1 selon le petit diamètre afin de dégager les languettes de retenue 51 des butées inférieures 11.

La mise en forme de la plaque ajourée 3 peut s'effectuer notamment par emboutissage. Les conformations 30 périphériques, les conformations 31, 32, 33, 34, 35, 36 allongées et les dépressions périphériques 21 peuvent être obtenues lors de cette opération. Les perforations 4 et/ou les ouvertures frontales 24 peuvent avantageusement être obtenues lors de cette même opération. Les pièces 5 peuvent être fixées à la plaque ajourée 3 lors d'une opération de frappe, par exemple après l'opération d'emboutissage. La fabrication du fond perforé 2 est ainsi particulièrement économique.

De plus l'entretien du fond perforé 2 est particulièrement aisé, grâce au faible accrochage des aliments sur la surface de la plaque ajourée 3, et grâce à la disposition et à la géométrie des perforations 4 qui évite le contact direct des zones perforées avec la plupart des aliments. Les perforations 4 agencées dans les conformations 31, 32, 33, 34, 35, 36 formant les dépressions 6 évitent l'accrochage des aliments au niveau des perforations 4.

En outre, la qualité de cuisson est favorisée par la surface importante des perforations 4, ainsi que par leur répartition sur le fond perforé 2.

A titre de variante, les conformations 31, 32, 33, 34, 35, 36 pourraient présenter d'autres géométries, notamment circulaires ou encore cruciformes , sans pourtant sortir des limites définies par la revendication 1.

A titre de variante, au moins l'une des séries de conformations, 31, 32, 33, 34, 35, 36 pourrait être remplacée par une conformation annulaire comportant au moins une perforation 4.

A titre de variante, la plaque ajourée 3 peut comporter une ou plusieurs portions de rebord périphérique s'étendant vers le haut et/ou vers le bas, formant une ou plusieurs conformations. Toutefois, un tel rebord périphérique n'est pas annulaire.

A titre de variante au moins l'une des conformations 31 ; 32 ; 33 ; 34 ; 35 ; 36 peut présenter une perforation 4.

A titre de variante au moins l'une des conformations 30 pourrait présenter une ou plusieurs perforations et/ou former une dépression.

A titre de variante, les conformations de deux séries adjacentes, par exemple les conformations 33 de la troisième série et les conformations 34 de la quatrième série, et/ou les conformations 34 de la quatrième série et les conformations 35 de la cinquième série pourraient être agencées de manière à se rejoindre et former une conformation présentant une forme en spirale et/ou une forme repliée, et/ou une forme ramifiée.

A titre de variante, la plaque ajourée pourrait présenter selon une section radiale quelconque une conformation présentant une forme en spirale et/ou une forme repliée, et/ou une forme ramifiée, une ou plusieurs perforations étant ménagées dans ladite conformation.

A titre de variante, certaines des conformations 30, 31, 32, 33, 34, 35, 36 de la plaque ajourée pourraient se rejoindre pour former une ou plusieurs conformations ayant une forme ramifiée ou non, certaines portions de conformation étant avantageusement allongées et/ou agencées circonférentiellement , sans pourtant sortir des limites définies par la revendication 1.

A titre de variante, certaines portions de conformation pourraient être agencées circonférentiellement ou avec un angle inférieur à 30° par rapport à la direction circonférentielle.

A titre de variante, au moins certaines portions de ladite conformation ou desdites conformations peuvent être des dépressions.

La présente invention n'est nullement limitée à l'exemple de réalisation décrit et à ses variantes, mais englobe de nombreuses modifications dans le cadre des revendications.

## Revendications

1. Elément de cuisson pour cuiseur vapeur, comprenant une paroi latérale tubulaire (1) et un fond perforé (2) amovible, la paroi latérale tubulaire (1) présentant un épaulement intérieur (10) prévu pour recevoir le fond perforé (2), le fond perforé (2) comportant une plaque ajourée (3) obtenue par déformation d'une tôle métallique revêtue ou non, la plaque ajourée (3) étant dépourvue de rebord périphérique annulaire, la plaque ajourée (3) présentant des perforations (4), **caractérisé en ce que** la plaque ajourée (3) présente selon une section radiale quelconque au moins une conformation (31, 32, 33, 34, 35, 36) disposée transversalement par rapport à ladite section radiale et formant une dépression (6) allongée selon une direction circonférentielle, et **en ce que** les bords supérieurs des perforations (4) sont disposés dans le fond de ladite dépression ou d'au moins certaines desdites dépressions (6).

2. Elément de cuisson pour cuiseur vapeur selon la revendication 1, **caractérisé en ce que** la paroi latérale tubulaire (1) est réalisée dans une matière différente de la matière de la plaque ajourée (3).

3. Elément de cuisson pour cuiseur vapeur selon la revendication 2, **caractérisé en ce que** la paroi latérale tubulaire (1) est réalisée dans une matière transparente ou translucide.

4. Elément de cuisson pour cuiseur vapeur selon la revendication 3, **caractérisé en ce que** la paroi latérale tubulaire (1) est réalisée en matière plastique.

5. Elément de cuisson pour cuiseur vapeur selon la revendication 3, **caractérisé en ce que** la paroi latérale tubulaire (1) est réalisée en verre.

6. Elément de cuisson pour cuiseur vapeur selon l'une des revendications 1 à 5. **caractérisé en ce que** la plaque ajourée (3) comporte une zone centrale (8) plus proche du centre que du bord de ladite plaque ajourée (3), toute droite passant par ladite zone centrale (8) rencontrant ladite conformation ou au moins une desdites conformations (31, 32, 33, 34, 35, 36).

7. Elément de cuisson pour cuiseur vapeur selon la revendication 6, **caractérisé en ce que** toute droite passant par ladite zone centrale (8) rencontre de part et d'autre de ladite zone centrale (8) ladite conformation ou au moins une desdites conformations (31, 32, 33, 34, 35, 36).

8. Elément de cuisson pour cuiseur vapeur selon l'une des revendications 1 à 7, **caractérisé en ce qu'**au moins certaines des conformations (31, 32, 33, 34, 35, 36) sont allongées.

9. Elément de cuisson pour cuiseur vapeur selon la revendication 8, **caractérisé en ce qu'**au moins certaines des conformations (33, 34, 35) allongées sont agencées circonférentiellement.

10. Elément de cuisson pour cuiseur vapeur selon la revendication 9, **caractérisé en ce qu'**au moins deux séries desdites conformations (33, 34, 35) allongées sont agencées de manière alternée.

11. Elément de cuisson pour cuiseur vapeur selon la revendication 10, **caractérisé en ce qu'**au moins trois séries desdites conformations (33, 34, 35) allongées sont agencées de manière alternée.

12. Elément de cuisson pour cuiseur vapeur selon l'une des revendications 1 à 11, **caractérisé en ce que** chaque dépression (6) comporte au moins une des perforations (4).

13. Elément de cuisson pour cuiseur vapeur selon l'une des revendications 1 à 12, **caractérisé en ce qu'**au moins certaines des perforations (4) sont allongées.

14. Elément de cuisson pour cuiseur vapeur selon l'une des revendications 1 à 13, **caractérisé en ce que** dos pièces (5) présentant une languette de retenue (51) apte à coopérer avec une butée inférieure (11) de la paroi latérale tubulaire (1) sont montées sur la plaque ajourée (3).

15. Elément de cuisson pour cuiseur vapeur selon la revendication 14, **caractérisé en ce que** les pièces (5) prennent appui sur la plaque ajourée (3) et présentent des bras (52, 53, 54) engagés sous la plaque ajourée (3).

16. Elément de cuisson pour cuiseur vapeur selon l'une des revendications 14 ou 15, **caractérisé en ce que** chaque pièce (5) est logée dans une dépression périphérique (21) de la plaque ajourée (3).

17. Elément de cuisson pour cuiseur vapeur selon l'une des revendications 14 à 16 **caractérisé en ce que** chaque pièce (5) comporte au moins un renfoncement (55) dans lequel la plaque ajourée (3) est déformée pour réaliser un point d'ancrage.

18. Elément de cuisson pour cuiseur vapeur selon l'une des revendications 14 à 17 **caractérisé en ce que** la plaque ajourée (3) comporte une conformation (30) périphérique s'étendant entre les languettes de retenue (51).

19. Elément de cuisson pour cuiseur vapeur selon l'une des revendications 14 à 18, **caractérisé en ce que** le fond perforé (2) présente une géométrie elliptique et **en ce qu'**il comporte deux languettes de retenue (51) disposées de manière diamétralement opposées selon le petit diamètre.

20. Elément de cuisson pour cuiseur vapeur selon l'une des revendications 1 à 19, **caractérisé en ce que** la plaque ajourée (3) est obtenue à partir d'une tôle d'aluminium revêtue sur sa face supérieure d'une couche superficielle anti-adhérente.

21. Elément de cuisson pour cuiseur vapeur selon l'une des revendications 1 à 19, **caractérisé en ce que** la plaque ajourée (3) est obtenue à partir d'une tôle d'acier inoxydable.

## Claims

1. A cooking element for a steam cooking utensil, said cooking element comprising a tubular side wall (1) and a removable perforated bottom (2), the tubular side wall (1) having an internal shoulder (10) designed to receive the perforated bottom (2), the perforated bottom (2) comprising a perforated plate (3) obtained by deforming an optionally coated metal sheet, the perforated plate (3) not being provided with an annular peripheral rim, the perforated plate (3) being provided with perforations (4), said cooking element being **characterized in that**, in any radial section, the perforated plate (3) has at least one shape (31, 32, 33, 34, 35, 36) disposed transversely relative to said radial section and forming an elongate depression (6) in a circumferential direction, and **in that** the top edges of the perforations (4) are disposed in the bottoms of said depressions or of at least some of said depressions (6).

2. A cooking element for a steam cooking utensil according to claim 1, **characterized in that** the tubular side wall (1) is made of a material that is different from the material of the perforated plate (3).

3. A cooking element for a steam cooking utensil according to claim 2, **characterized in that** the tubular side wall (1) is made of a transparent or translucent material.

4. A cooking element for a steam cooking utensil according to claim 3, **characterized in that** the tubular side wall (1) is made of a plastics material.

5. A cooking element for a steam cooking utensil according to claim 3, **characterized in that** the tubular side wall (1) is made of glass.

6. A cooking element for a steam cooking utensil according to any one of claims 1 to 5, **characterized in that** the perforated plate (3) has a central zone (8) that is closer to the center than to the edge of said perforated plate (3), any straight line that passes through said central zone (8) encountering said shape or at least one of said shapes (31, 32, 33, 34, 35, 36).

7. A cooking element for a steam cooking utensil according to claim 6, **characterized in that** any straight line that passes through said central zone (8) encounters, on either side of central zone (8), said shape or at least one of said shapes (31, 32, 33, 34, 35, 36).

8. A cooking element for a steam cooking utensil according to any one of claims 1 to 7, **characterized in that** at least some of the shapes (31, 32, 33, 34, 35, 36) are elongate.

9. A cooking element for a steam cooking utensil according to claim 8, **characterized in that** at least some of the elongate shapes (33, 34, 35) are arranged circumferentially.

10. A cooking element for a steam cooking utensil according to claim 9, **characterized in that** at least two series of said elongate shapes (33, 34, 35) are arranged in staggered manner.

11. A cooking element for a steam cooking utensil according to claim 10, **characterized in that** at least three series of said elongate shapes (33, 34, 35) are arranged in staggered manner.

12. A cooking element for a steam cooking utensil according to any one of claims 1 to 11, **characterized in that** each depression (6) is provided with at least one of the perforations (4).

13. A cooking element for a steam cooking utensil according to any one of claims 1 to 12, **characterized in that** at least some of the perforations (4) are elongate.

14. A cooking element for a steam cooking utensil according to any one of claims 1 to 13, **characterized in that** pieces (5) are mounted on the perforated plate (3), each of which pieces is provided with a retaining tongue (51) suitable for co-operating with a bottom abutment (11) on the tubular side wall (1).

15. A cooking element for a steam cooking utensil according to claim 14, **characterized in that** the pieces (5) bear against the perforated plate (3) and have arms (52, 53, 54) engaged under the perforated plate (3).

16. A cooking element for a steam cooking utensil according to claim 14 or claim 15, **characterized in that** each piece (5) is received in a peripheral depression (21) in the perforated plate (3).

17. A cooking element for a steam cooking utensil according to any one of claims 14 to 16, **characterized in that** each piece (5) is provided with at least one recess (55) into which the perforated plate (3) is deformed so as to form an anchoring point.

18. A cooking element for a steam cooking utensil according to any one of claims 14 to 17, **characterized in that** the perforated plate (3) is provided with a peripheral shape (30) extending between the retaining tongues (51).

19. A cooking element for a steam cooking utensil according to any one of claims 14 to 18, **characterized in that** the perforated bottom (2) is elliptic in geometrical shape, and **in that** it is provided with two retaining tongues (51) disposed in diametrically opposite manner on the short diameter.

20. A cooking element for a steam cooking utensil according to any one of claims 1 to 19, **characterized in that** the perforated plate (3) is obtained from a sheet of aluminum coated on its top face with a non-stick surface layer.

21. A cooking element for a steam cooking utensil according to any one of claims 1 to 19, **characterized in that** the perforated plate (3) is obtained from a sheet of stainless steel.

## Patentansprüche

1. Kochelement für Dampfkocher, mit einer rohrförmigen Seitenwand (1) und einem abnehmbaren perforierten Boden (2), wobei die rohrförmige Seitenwand (1) eine Innenschulter (10) aufweist, die zur Aufnahme des perforierten Bodens (2) vorgesehen ist, wobei der perforiert Boden (2) eine gelochte Platte (3) aufweist, die durch Verformung eines beschichteten oder unbeschichteten Metallblechs gebildet wird, wobei die gelochte Platte (3) keinen ringförmigen Umfangsrand aufweist, wobei die gelochte Platte (3) Perforierungen (4) aufweist, **dadurch gekennzeichnet, dass** die gelochte Platte (3) gemäß einem beliebigen radialen Querschnitt mindestens eine Ausgestaltung (31, 32, 33, 34, 35, 36) aufweist, die quer zum radialen Querschnitt angeordnet ist und eine längliche Vertiefung (6) gemäß einer umlaufenden Richtung bildet, und **dadurch**, dass die oberen Ränder der Perforierungen (4) im Boden der Vertiefungen oder mindestens bestimmter Vertiefungen (6) angeordnet sind.

2. Kochelement für Dampfkocher nach Anspruch 1, **dadurch gekennzeichnet, dass** die rohrförmige Seitenwand (1) aus einem anderen Material als das Material der gelochten Platte (3) besteht.

3. Kochelement für Dampfkocher nach Anspruch 2, **dadurch gekennzeichnet, dass** die rohrförmige Seitenwand (1) aus einem durchsichtigen oder durchscheinenden Material besteht.

4. Kochelement für Dampfkocher nach Anspruch 3, **dadurch gekennzeichnet, dass** die rohrförmige Seitenwand (1) aus Kunststoff besteht.

5. Kochelement für Dampfkocher nach Anspruch 3, **dadurch gekennzeichnet, dass** die rohrförmige Seitenwand (1) aus Glas (1) besteht.

6. Kochelement für Dampfkocher nach einem der Ansprüche 1 bis 5, **dadurch gekennzeichnet, dass** die gelochte Platte (3) einen zentralen Bereich (8) aufweist, der näher an der Mitte als am Rand der gelochten Platte (3) liegt, wobei jede durch den zentralen Bereich (8) hindurchgehende Gerade die Ausgestaltung oder mindestens eine der Ausgestaltungen (31, 32, 33, 34, 35, 36) berührt.

7. Kochelement für Dampfkocher nach Anspruch 6, **dadurch gekennzeichnet, dass** jede durch den zentralen Bereich (8) hindurchgehende Gerade auf der einen und der anderen Seite des zentralen Bereichs (6) die Ausgestaltung oder mindestens eine der Ausgestaltungen (31, 32, 33, 34, 35, 36) berührt.

8. Kochelement für Dampfkocher nach einem der Ansprüche 1 bis 7, **dadurch gekennzeichnet, dass** mindestens bestimmte Ausgestaltungen (31, 32, 33, 34, 35, 36) länglich sind.

9. Kochelement für Dampfkocher nach Anspruch 8, **dadurch gekennzeichnet, dass** mindestens bestimmte längliche Ausgestaltungen (33, 34, 35) umfangsmäßig angeordnet sind.

10. Kochelement für Dampfkocher nach Anspruch 9, **dadurch gekennzeichnet, dass** mindestens zwei Reihen der länglichen Ausgestaltungen (33, 34, 35) alternierend angeordnet sind.

11. Kochelement für Dampfkocher nach Anspruch 10, **dadurch gekennzeichnet, dass** mindestens drei Reihen der länglichen Ausgestaltungen (33, 34, 35) alternierend angeordnet sind.

12. Kochelement für Dampfkocher nach einem der Ansprüche 1 bis 11, **dadurch gekennzeichnet, dass** jede Vertiefung (6) mindestens eine der Perforierungen (4) aufweist.

13. Kochelement für Dampfkocher nach einem der Ansprüche 1 bis 12, **dadurch gekennzeichnet, dass** mindestens bestimmte Perforierungen (4) länglich sind.

14. Kochelement für Dampfkocher nach einem der Ansprüche 1 bis 13, **dadurch gekennzeichnet, dass** Teile (5), die eine Haltezunge (51) aufweisen, welche mit einem unteren Anschlag (11) der rohrförmigen Seitenwand (1) zusammenwirken kann, an der gelochten Platte (3) angebracht sind.

15. Kochelement für Dampfkocher nach Anspruch 14, **dadurch gekennzeichnet, dass** die Teile (5) sich an der gelochten Platte (3) abstützen und Arme (52, 53, 54) aufweisen, die unter die gelochte Platte (3) eingreifen.

16. Kochelement für Dampfkocher nach einem der Ansprüche 14 oder 15, **dadurch gekennzeichnet, dass** jedes Teil (5) in einer Umfangsvertiefung (21) der gelochten Platte (3) aufgenommen ist.

17. Kochelement für Dampfkocher nach einem der Ansprüche 14 bis 16, **dadurch gekennzeichnet, dass** jedes Teil (5) mindestens eine Mulde (55) aufweist, in der die gelochte Platte (3) verformt wird, um einen Verankerungspunkt zu bilden.

18. Kochelement für Dampfkocher nach einem der Ansprüche 14 bis 17, **dadurch gekennzeichnet, dass** die gelochte Platte (3) eine Umfangsausgestaltung (30) aufweist, die sich zwischen den Haltezungen (51) erstreckt.

19. Kochelement für Dampfkocher nach einem der Ansprüche 14 bis 18, **dadurch gekennzeichnet, dass** der perforierte Boden (2) eine elliptische Geometrie aufweist, und dass er zwei Haltzungen (51) aufweist, die gemäß einem kleinen Durchmesser diametral gegenüberliegend angeordnet sind.

20. Kochelement für Dampfkocher nach einem der Ansprüche 1 bis 19, **dadurch gekennzeichnet, dass** die gelochte Platte (3) aus einem Aluminiumblech besteht, das auf seiner Oberseite mit einer oberflächlichen Antihaftschicht beschichtet ist.

21. Kochelement für Dampfkocher nach einem der Ansprüche 1 bis 19, **dadurch gekennzeichnet, dass** die gelochte Platte (3) aus einem nichtrostendem Stahlblech besteht.
